# EUROPEAN PATENT APPLICATION

(11) **EP 4 761 226 A1**
(43) Date of publication of application: **17.06.2026**
(21) Application number: 25222612.1
(22) Date of filing: 11.12.2025
(51) Int. Cl.: H04N 1/00, G06F 3/12, H04N 1/60

(54) **PRINT JOB MANAGEMENT METHOD, PRINT JOB MANAGEMENT APPARATUS, AND PROGRAM**

(30) Priority: 13.12.2024 JP 2024218453
(71) Applicant: Konica Minolta, Inc., Tokyo 100-7015 (JP)
(72) Inventor: SUZUKI, Kouyo, Tokyo, 100-7015 (JP)
(74) Representative: MFG Patentanwälte Meyer-Wildhagen Meggle-Freund Gerhard PartG mbB

(57) **Abstract**

A print job management method is for managing a print job to be executed by an image formation engine (36). The method includes: obtaining information on a first scanner profile for converting read data of a printed material on which an image has been formed by a first print job; setting the first scanner profile in association with the first print job, based on the obtained information on the first scanner profile, obtaining information on a second scanner profile for converting read data of a printed material on which an image has been formed by a second print job; and setting the second scanner profile in association with the second print job, based on the obtained information of the second scanner profile.

## Description

### BACKGROUND OF THE INVENTION

### TECHNICAL FIELD

The present disclosure relates to a print job management method, a print job management apparatus, and a program.

### DESCRIPTION OF RELATED ART

In managing colors of printed materials on which images have been formed by an image forming apparatus, a scanner is usually used from the viewpoint of reading speed. The data read by the scanner (RGB values) is converted into colorimetric values (e.g., L*a*b values, XYZ values) by a scanner profile.

According to Japanese Unexamined Patent Publication No. 2023-77467, designation of a scanner profile is received with respect to a scanning-related job to be executed by a multifunction peripheral.

### SUMMARY OF THE INVENTION

However, no technology has been proposed for designating a scanner profile in reading a printed material on which an image has been formed by a print job. Print jobs involving the use of a scanner are, for example, inspection of a printed material based on a read image obtained by reading the printed material, color adjustment (creation of color parameters) of an image forming apparatus, color verification, and color matching based on a color sample.

With the recent progress of image formation technologies, various image formation processes have emerged, such as image formation using special colors or special sheets. In such circumstances, the accuracy of the scanner reading the printed material varies depending on the kind of print job. For example, an optimal scanner profile varies depending on sheets, color materials, and other conditions used for image formation. In color management (e.g., color adjustment, color verification) that involves use of a scanner, it has been difficult to meet needs of customers who require high print quality.

The present disclosure has been made in consideration of the above-described challenges in the conventional technology. An object thereof is to use a scanner profile suitable for each print job.

To achieve at least one of the abovementioned objects, according to an aspect of the present invention, there is provided a print job management method of managing a print job to be executed by an image formation engine, the method including: obtaining information on a first scanner profile for converting read data of a printed material on which an image has been formed by a first print job; setting the first scanner profile in association with the first print job, based on the obtained information on the first scanner profile; obtaining information on a second scanner profile for converting read data of a printed material on which an image has been formed by a second print job; and setting the second scanner profile in association with the second print job, based on the obtained information of the second scanner profile.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:
FIG. 1 illustrates a configuration of a color management system in a first embodiment of the present disclosure;
FIG. 2 illustrates a hardware configuration of an image forming apparatus;
FIG. 3 illustrates an external configuration of the image forming apparatus;
FIG. 4 illustrates a hardware configuration of a PC;
FIG. 5 illustrates a hardware configuration of a printer controller;
FIG. 6 illustrates a hardware configuration of a color management apparatus;
FIG. 7 is an example of a correspondence table showing correspondences between profile names and profile data;
FIG. 8 is an example of a correspondence table showing correspondences between sheet types and the profile names;
FIG. 9 is an example of a correspondence table showing correspondences between image forming modes and profile names;
FIG. 10 is an example of a correspondence table showing correspondences between print job types and profile names;
FIG. 11 is an example of a correspondence table showing correspondences between user names and profile names;
FIG. 12 is a ladder chart of an inspection process to be executed by the PC and the image forming apparatus;
FIG. 13 is an example of a job management screen displayed on the PC;
FIG. 14 is an example of a screen displayed on the PC for selecting a profile obtainment method;
FIG. 15 is a flowchart of a scanner profile setting process A;
FIG. 16 is an example of a screen for selecting a profile obtainment method that shows a scanner profile designation field;
FIG. 17 is a flowchart of a scanner profile setting process B;
FIG. 18 is a flowchart of a scanner profile setting process C;
FIG. 19 is a flowchart of a scanner profile setting process D;
FIG. 20 is a flowchart of a scanner profile setting process E;
FIG. 21 is an example of a screen for selecting a profile obtainment method selection that shows a user designation field;
FIG. 22 is a ladder chart of a color parameter creation process to be executed by the color management apparatus and the image forming apparatus in a second embodiment;
FIG. 23 is an example of a color parameter creation screen displayed on the color management apparatus;
FIG. 24 is a ladder chart of a color verification process to be executed by the color management apparatus and the image forming apparatus in a third embodiment;
FIG. 25 is an example of a setting screen related to color verification displayed on a color management apparatus;
FIG. 26 is a ladder chart of a color matching process based on a color sample to be executed by the color management apparatus and the image forming apparatus in a fourth embodiment;
FIG. 27 is a ladder chart of the color matching process based on a color sample to be executed by the color management apparatus and the image forming apparatus in the fourth embodiment;
FIG. 28 is a flowchart of a scanner profile setting process F in a fifth embodiment; and
FIG. 29 is a flowchart of a scanner profile setting process G.

### DETAILED DESCRIPTION

Hereinafter, one or more embodiments of the present invention will be described with reference to the drawings. Advantages and features provided by the embodiments will be understood from the following detailed description and drawings. However, the scope of the invention is not limited to the disclosed embodiments.

### [First Embodiment]

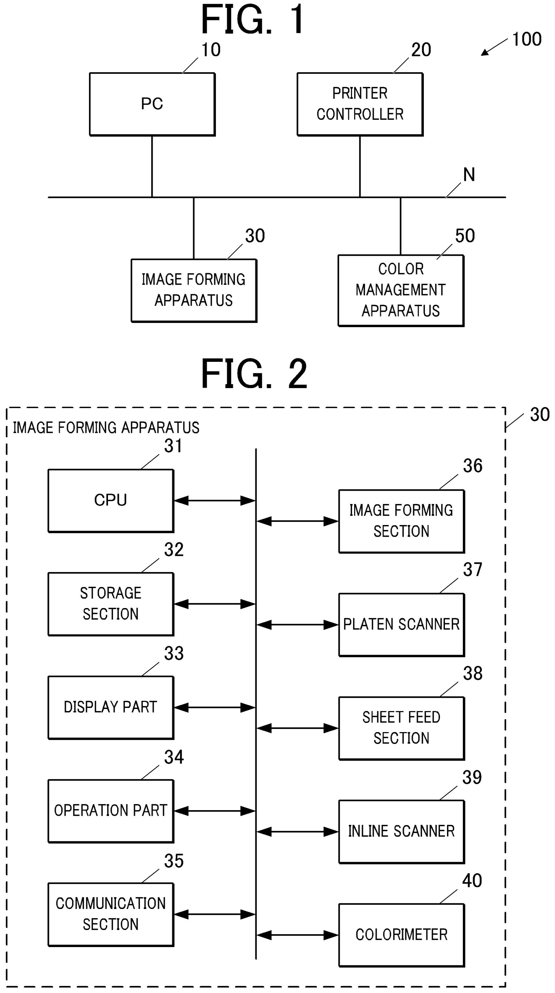

FIG. 1 shows a configuration of a color management system 100 according to a first embodiment. The color management system 100 includes a personal computer (PC) 10, a printer controller 20, an image forming apparatus 30, and a color management apparatus 50. The apparatuses constituting the color management system 100 are connected via a communication network N, such as a network (Local Area Network) to perform data communication. The number of apparatuses for each apparatus is not particularly limited. The color management system 100 is used in a print shop that provides printed materials to customers, for example.

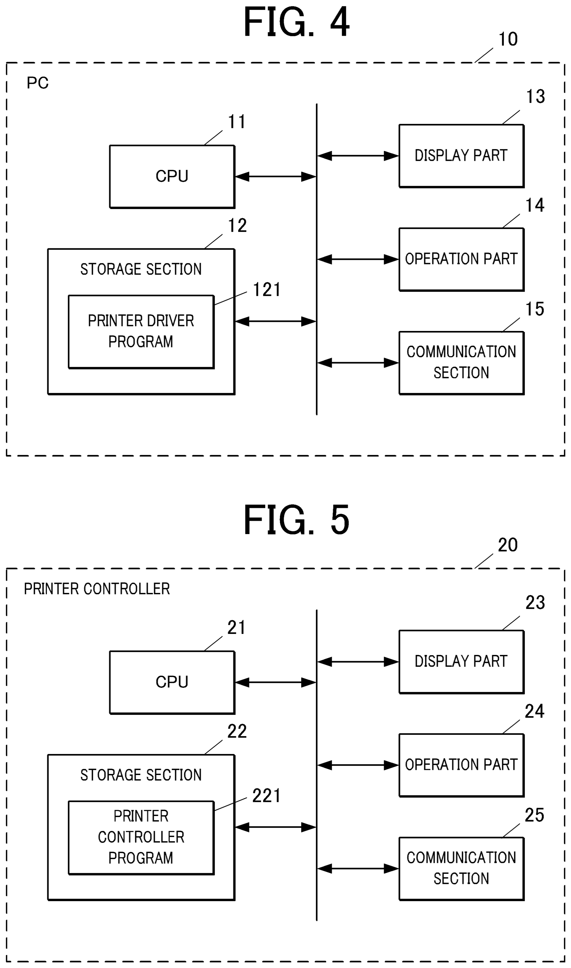

A printer driver program 121 (see FIG. 4) is installed in the PC 10. With the printer driver, the PC 10 instructs the printer controller 20 or the image forming apparatus 30 to perform printing. Specifically, in response to an operation by an operator, the PC 10 generates print data described in a page description language (PDL) or the like that can be interpreted by the printer controller 20. The PC 10 sends the generated print data to the printer controller 20.

A printer controller program 221 (see FIG. 5) is installed in the printer controller 20. The printer controller 20 receives print data from the PC 10. Further, the printer controller 20 receives chart data from the color management apparatus 50. The printer controller 20 performs raster image processing (RIP) on the print data or the chart data to generate print image data (raster data). Further, the printer controller 20 performs image processing, such as color conversion and screening, on the print image data. The printer controller 20 sends the image data (raster data) after image processing to the image forming apparatus 30.

The printer controller 20 may be built in the image forming apparatus 30. The printer controller 20 and the image forming apparatus 30 may be connected to each other via a dedicated line, such as a PCI connection.

The image forming apparatus 30 forms an image on sheets, based on raster data (image data in a bitmap format). Examples of sheets include printing sheets and various films. Examples of the type of sheet include plain paper, high-quality paper, gloss coated sheet, and matt coated sheet.

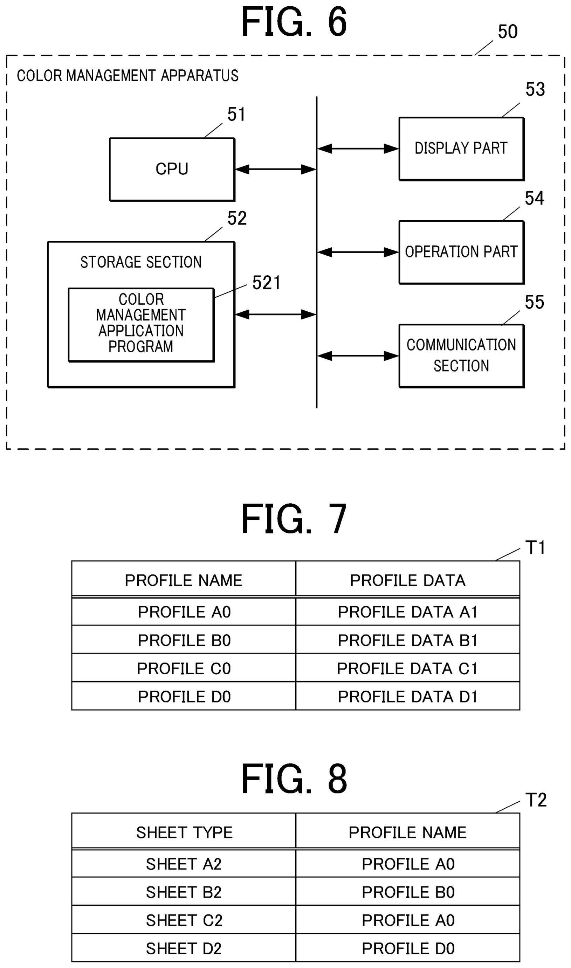

A color management application program 521 (see FIG. 6) for performing color management of the image forming apparatus 30 is installed in the color management apparatus 50. The color management apparatus 50 instructs execution of color verification, color adjustment, and color matching based on color samples for the image forming apparatus 30 and performs data analysis and history management.

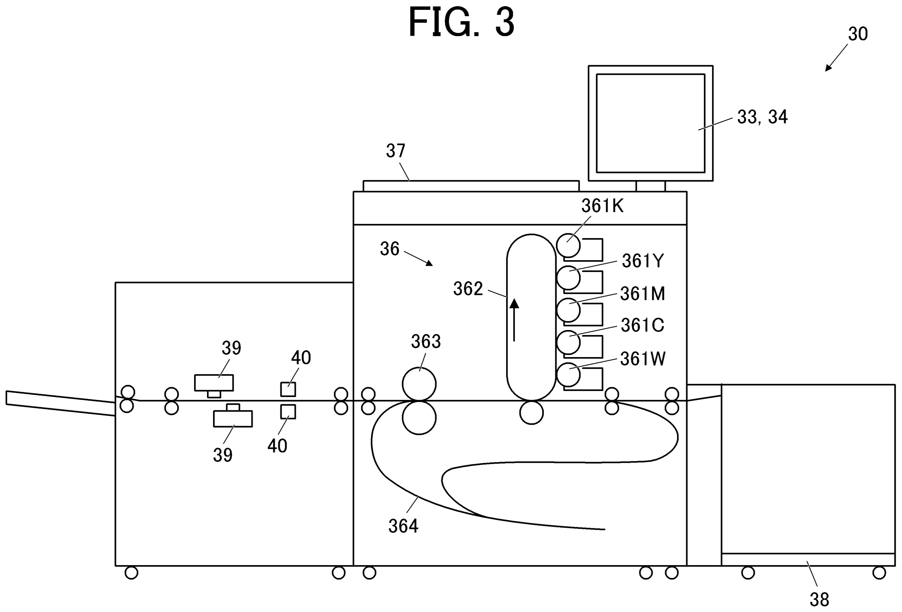

FIG. 2 illustrates a hardware configuration of the image forming apparatus 30. FIG. 3 illustrates an external configuration of the image forming apparatus 30. The image forming apparatus 30 is capable of forming images with white (W) toner as a special color in addition to toner of four colors of cyan (C), magenta (M), yellow (Y), and black (K).

The image forming apparatus 30 includes a central processing unit (CPU) 31, a storage section 32, a display part 33, an operation part 34, a communication section 35, an image forming section 36, a platen scanner 37, a sheet feed section 38, an inline scanner 39, and a colorimeter 40.

The CPU 31 centrally controls processing operations of each component of the image forming apparatus 30. The CPU 31 reads various processing programs stored in the storage section 32 and performs various kinds of processing in cooperation with the programs.

The storage section 32 includes a hard disk drive (HDD), a solid state drive (SSD), and/or a nonvolatile memory. The storage section 32 stores various processing programs and data related to various types of processing. For example, the storage section 32 stores sheet information related to the image forming apparatus 30. The storage section 32 also stores a target profile, a printer profile, and a scanner profile.

The display part 33 includes a liquid crystal display (LCD). The display part 33 displays various screens according to instructions of display signals input by the CPU 31.

The operation part 34 receives various kinds of operations by the operator and outputs operation signals based on the operations to the CPU 31. The operation part 34 includes a touch screen, a numeric keypad, a start button, and a stop button.

The communication section 35 performs data communication with external devices. For example, the communication section 35 receives raster data from the printer controller 20. The communication section 35 receives print instructions, instruction to read charts, and so forth from the color management apparatus 50.

The image forming section 36 forms an image on a sheet by the electrophotographic method. The image forming section 36 includes photosensitive drums 361C, 361M, 361Y, 361K, and 361W corresponding to the respective colors of cyan (C), magenta (M), yellow (Y), black (K), and white (W), an intermediate transfer belt 362, a fixing section 363, and a reversing section 364. For example, the image forming section 36 uniformly charges the photosensitive drum 361C corresponding to cyan and then scans and exposes the photosensitive drum 361C with a laser beam, based on image data of cyan, to form an electrostatic latent image. The image forming section 36 attaches cyan toner to the electrostatic latent image on the photosensitive drum 361C to develop the image. Processing for the other colors is the same as the processing for cyan. The image forming section 36 sequentially transfers the toner images of the respective colors formed on the photosensitive drums 361C, 361M, 361Y, 361K, and 361W corresponding to the respective colors onto the intermediate transfer belt 362 (primary transfer). That is, a color toner image in which toner images of multiple colors are superimposed is formed on the intermediate transfer belt 362. The image forming section 36 collectively transfers the color toner image on the intermediate transfer belt 362 onto a sheet (secondary transfer). The fixing section 363 fixes the toner image on the sheet by applying heat and pressure. When forming images on both sides of the sheet, the reversing section 364 reverses the sheet on the front surface of which the image has been fixed and conveys the sheet again to the image forming section 36. The CPU 31 controls the image forming section 36 to form an image, based on image data.

FIG. 3 illustrates an example of the image forming section 36 that forms images using toner of five colors of cyan, magenta, yellow, black, and white (CMYKW). For another example, the toner used by the image forming section 36 may not include white or may include a special color other than white.

The platen scanner 37 reads a sheet, a color sample, or the like placed on a document plate and generates read data having pixel values of respective colors of red (R), green (G), and blue (B).

The sheet feed section 38 includes a plurality of sheet feed trays and feeds sheets stored in the sheet feed trays to the image forming section 36.

The inline scanner 39 is provided above a conveyance path on the downstream of the image forming section 36 in the sheet conveyance direction. The inline scanner 39 can read the entire sheet in a sheet width direction perpendicular to the sheet conveyance direction. The inline scanner 39 reads the conveyed sheet and generates read data having pixel values of respective colors of red (R), green (G), and blue (B). The inline scanner 39 is, for example, a linear CCD sensor.

The colorimeter 40 is provided above the conveyance path on the downstream of the image forming section 36 in the sheet conveyance route. The colorimeter 40 is a spectral colorimeter and outputs colorimetric values (e.g., L*a*b values, XYZ values). The colorimeter 40 is movable in the sheet width direction. For example, the colorimeter 40 is used for calibration of the inline scanner 39 (creation of a scanner profile).

FIG. 4 illustrates a hardware configuration of the PC 10. The PC 10 includes a CPU 11, a storage section 12, a display part 13, an operation part 14, and a communication section 15.

The CPU 11 centrally controls processing operations of each component of the PC 10. The CPU 11 reads various processing programs stored in the storage section 12 and performs various kinds of processing in cooperation with the programs.

The storage section 12 includes an HDD, an SSD, and/or a non-volatile memory. The storage section 12 stores various processing programs such as a printer driver program 121, data related to various processes, and so forth.

The display part 13 includes an LCD. The display part 13 displays various screens in accordance with instructions of display signals input by the CPU 11.

The operation part 14 includes a keyboard and a pointing device, such as a mouse. The operation part 14 outputs, to the CPU 11, operation signals input by key operations on the keyboard and operations on the pointing device.

The communication section 15 performs data communication with external devices.

FIG. 5 shows a hardware configuration of the printer controller 20. The printer controller 20 includes a CPU 21, a storage section 22, a display part 23, an operation part 24, and a communication section 25. The components of the printer controller 20 are similar to those of the PC 10. The aspects different from the PC 10 will be described.

A printer controller program 221 is stored in the storage section 22. A target profile, a printer profile, and the like are stored in the storage section 22.

FIG. 6 shows a hardware configuration of the color management apparatus 50. The color management apparatus 50 includes a CPU 51, a storage section 52, a display part 53, an operation part 54, and a communication section 55. The components of the color management apparatus 50 are similar to those of the PC 10. The aspects different from the PC 10 will be described.

The storage section 52 stores a color management application program 521. The CPU 51 realizes a color management application in cooperation with the color management application program 521. The color management application provides a user interface for giving an instruction to perform color management of the image forming apparatus 30, checking a color verification result, calculating a correction value, and so forth. The method of using the color management application is not limited to the case where the program is locally installed. For another example, the color management apparatus 50 may use a color management application on a cloud via a browser in the form of a SaaS (Software as a Service).

In the first embodiment, the PC 10 (printer driver) corresponds to a print job management apparatus according to the present disclosure.

In the first embodiment, print job inspection will be described as an operation mode in which the image forming apparatus 30 uses the inline scanner 39.

The print job inspection is a process of printing an image, such as an illustration or a natural image, with the image forming apparatus 30 and inspecting whether the printed material has been printed as intended. For example, the print job inspection includes determining whether the printed material has been printed with intended colors and whether or not the printed material includes a defect, such as a misregistration, missing of image, or a stain.

In the print job inspection, a spot color (special color) or an alternative color in the printed material may be targeted.

The spot color is designated by a color of dedicated toner, dedicated ink, or the like on image data (document data). For the spot color, high color reproducibility is required. Examples of the spot color include a corporate color and a logo mark color. When the spot color is designated on image data, the spot color is replaced with a similar color created by a combination of process colors (CMYK values). The inspection of the spot color includes, for example, determining whether a difference between the color printed with the similar color (CMYK value) and spot color is equal to or less than an allowable value.

The alternative color refers to a replaced color in the function of replacing a set color with a designated color. The inspection of the alternative color includes determining whether the color printed with the replaced color (CMYK value) corresponds to an intended color (designated color).

The CPU 11 (hardware processor) of the PC 10 manages a print job to be executed by the image forming section 36 (image forming engine) of the image forming apparatus 30. The CPU 11 sets a scanner profile in association with a print job. "Setting a scanner profile in association with a print job" may refer to saving information indicating a correspondence between a print job and a scanner profile or notifying the other apparatus of information indicating the correspondence between the print job and the scanner profile.

The print job is a job based on document data. The "job based on document data" is a print job of normal printing. The wording "job based on document data" is used for distinguishing from a chart print job, which is aimed at performing color verification or color parameter creation, for example.

In the first embodiment, a job of inspecting a printed material on which an image has been formed based on document data (inspection job) will be described.

The CPU 11 obtains information of a first scanner profile. The first scanner profile is for converting read data of a printed material on which an image has been formed in a first print job. Based on the obtained information on the first scanner profile, the CPU 11 sets the first scanner profile in association with the first print job.

The CPU 11 obtains information on a second scanner profile. The second scanner profile is for converting read data of a printed material on which an image has been formed in a second print job. Based on the obtained information on the second scanner profile, the CPU 11 sets the second scanner profile in association with the second print job.

The storage section 12 of the PC 10 stores correspondence tables T1 to T5.

FIG. 7 shows an example of the data structure of the correspondence table T1. In the correspondence table T1, profile names and profile datasets are associated with each other in advance. A profile name is the name of a scanner profile. Profile data is data of a scanner profile. The profile data A1 to D1 may be stored in the storage section 12 (correspondence table T1) beforehand as individual datasets. For another example, only the profile data A1 may be registered in the storage section 12, and the profile data B1 to D1 may be generated based on the profile data A1. In that case, profile data may be generated using a generative AI.

FIG. 8 illustrates an example of the data structure of the correspondence table T2. In the correspondence table T2, sheet types and profile names are associated with each other in advance. The sheet type is the type of sheet and includes the material, basis weight, color, and surface treatment of the sheet. The sheet types and scanner profiles may not be associated on one-to-one basis. Different sheet types may be associated with an identical scanner profile. In the example of Fig. 8, the sheet A2 and the sheet C2 are associated with the same profile A0. The sheet types may be associated with profile data via the profile names, or the sheet types may be directly associated with the profile data. The same applies to the correspondence tables T3 to T5.

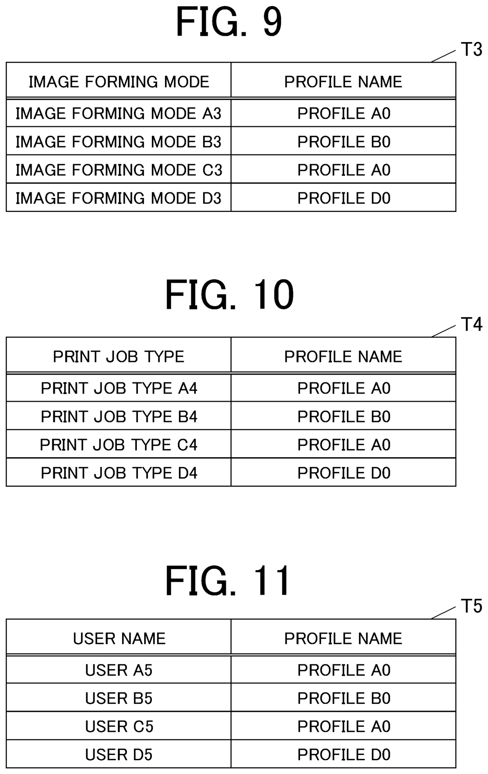

FIG. 9 shows an example of the data structure of the correspondence table T3. In the correspondence table T3, image forming modes and profile names are associated with each other in advance. The image forming mode is a mode of image formation, which varies depending on a difference in color (e.g., CMYK, K, CMYKW, W) of toner used for image formation, single-sided/double-sided printing, or the like.

FIG. 10 shows an example of the data structure of the correspondence table T4. In the correspondence table T4, print job types and profile names are associated with each other in advance. The print job type is the type of print job. For example, print jobs are classified into multiple groups (types) according to the use of printed materials and image types, for example. Examples of the use of printed materials include a calendar and a poster.

FIG. 11 shows an example of the data structure of the correspondence table T5. In the correspondence table T5, user name sand profile names are associated with each other in advance. The user name is the name of a user. For a print shop, the users may be customers who have requested print jobs or operators who execute the print jobs.

In response to receiving designation of a scanner profile, the CPU 11 obtains information on the designated scanner profile. The information of the scanner profile may be identification information (e.g. profile name) of the scanner profile or data of the scanner profile itself.

In response to receiving designation of a sheet type, the CPU 11 obtains information on the scanner profile corresponding to the designated sheet type. The CPU 11 refers to the correspondence table T2 and obtains the profile name corresponding to the designated sheet type.

In response to receiving designation of an image forming mode, the CPU 11 obtains information on the scanner profile corresponding to the designated image forming mode. The CPU 11 refers to the correspondence table T3 and obtains the profile name corresponding to the designated image forming mode.

The CPU 11 obtains information of the scanner profile corresponding to the print job type to be performed. The CPU 11 refers to the correspondence table T4 and obtains the profile name corresponding to the print job type to which a target print job belongs.

In response to receiving designation of the user, the CPU 11 obtains information on the scanner profile corresponding to the designated user. The CPU 11 refers to the correspondence table T5 and obtains the profile name corresponding to the designated user name.

Next, the operation of the color management system 100 according to the first embodiment will be described.

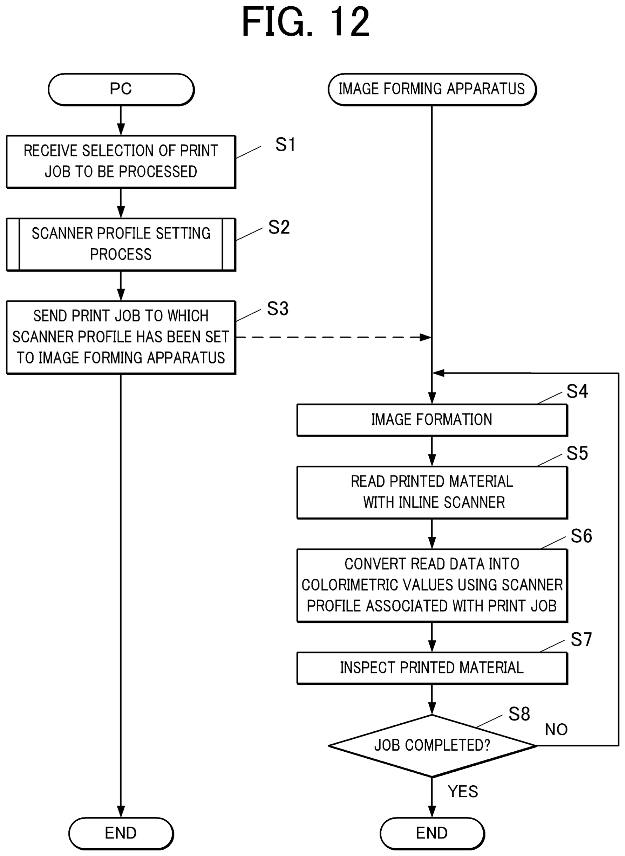

FIG. 12 is a ladder chart illustrating an inspection process to be executed by the PC 10 and the image forming apparatus 30.

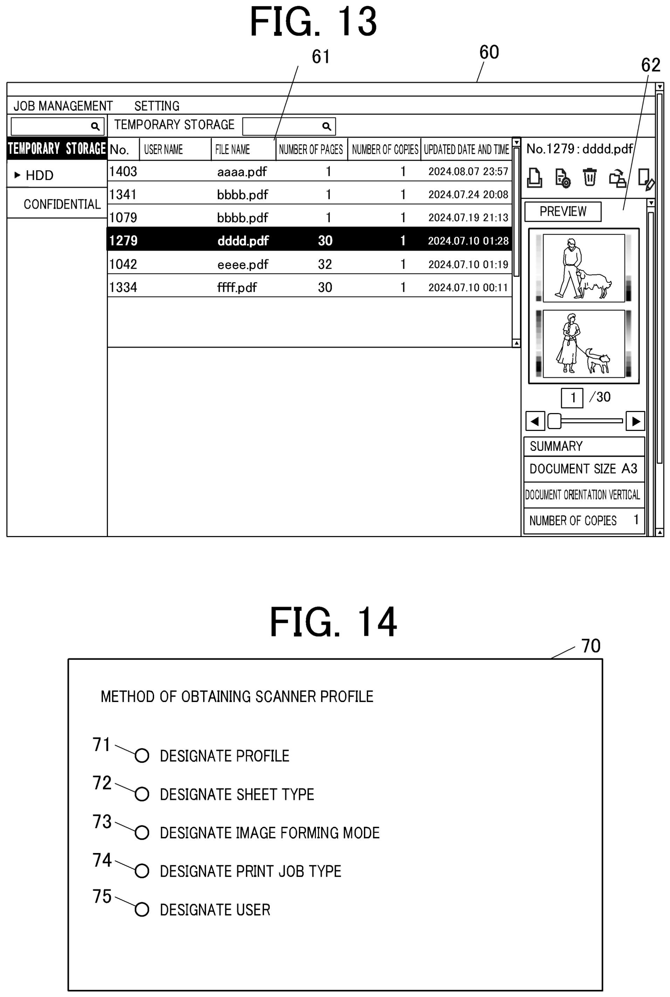

First, the CPU 11 of the PC 10 receives selection of a print job to be performed (step S1). For example, the CPU 11 displays a job management screen 60 on the display part 13, as illustrated in FIG. 13. The job management screen 60 includes a job list field 61 and a preview field 62.

In the job list field 61, a list of print jobs managed by the color management system 100 is displayed.

In the preview field 62, a preview image related to the print job selected in the job list field 61 is displayed.

When the operator selects a print job from the job list field 61 by operating the operation part 14, the CPU 11 displays a preview image(s) related to the selected print job in the preview field 62.

Next, the CPU 11 executes scanner profile setting process (step S2).

The CPU 11 displays a screen 70 for selecting a profile obtainment method on the display part 13, as illustrated in FIG. 14. On the screen 70 for selecting a profile obtainment method, a method of obtaining a scanner profile is selected. The screen 70 for selecting a profile obtainment method includes radio buttons 71 to 75 corresponding to profile designation, sheet type designation, image forming mode designation, print job type designation, and user designation, respectively. The operator selects one of the radio buttons 71 to 75 by operating the operation part 14. The operator may select a scanner profile obtainment method for each job or may select a scanner profile obtainment method as common setting for a plurality of jobs.

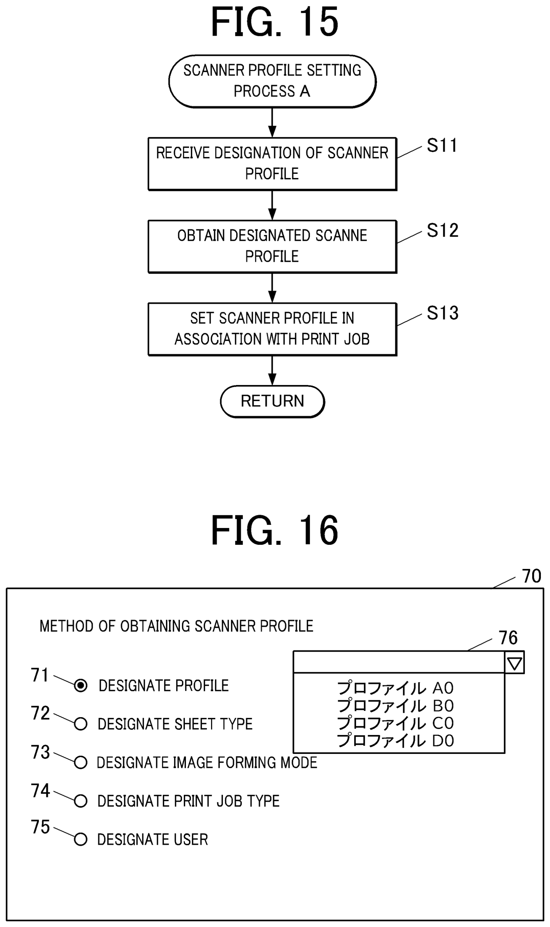

When the radio button 71 corresponding to profile designation is selected in the selection screen 70 (FIG. 14), the CPU 11 performs a scanner profile setting process in FIG. 15.

In the scanner profile setting process A, the CPU 11 receives designation of a scanner profile (step S11). Specifically, as illustrated in FIG. 16, the CPU 11 displays a scanner profile designation field 76 on the screen 70. The CPU 11 reads out profile names stored in the storage section 12 (the correspondence table T1). The CPU 11 displays the profile names as a pull-down menu in the scanner profile designation field 76. The CPU 11 may obtain profile names stored in the storage section 32 of the image forming apparatus 30. The operator specifies one of the profile names (scanner profiles) from the pull-down menu by operating the operation part 14.

Next, the CPU 11 obtains the designated scanner profile (step S12). The CPU 11 may obtain the profile name of the designated scanner profile or may obtain the profile data of the designated scanner profile.

Next, the CPU 11 sets the obtained scanner profile in association with the print job (step S13). For example, the CPU 11 adds identification information (e.g., profile name) of the scanner profile to the print job, thereby setting the scanner profile in association with the print job.

After step S13, the CPU 11 proceeds to step S3 of the inspection process (refer to FIG. 12).

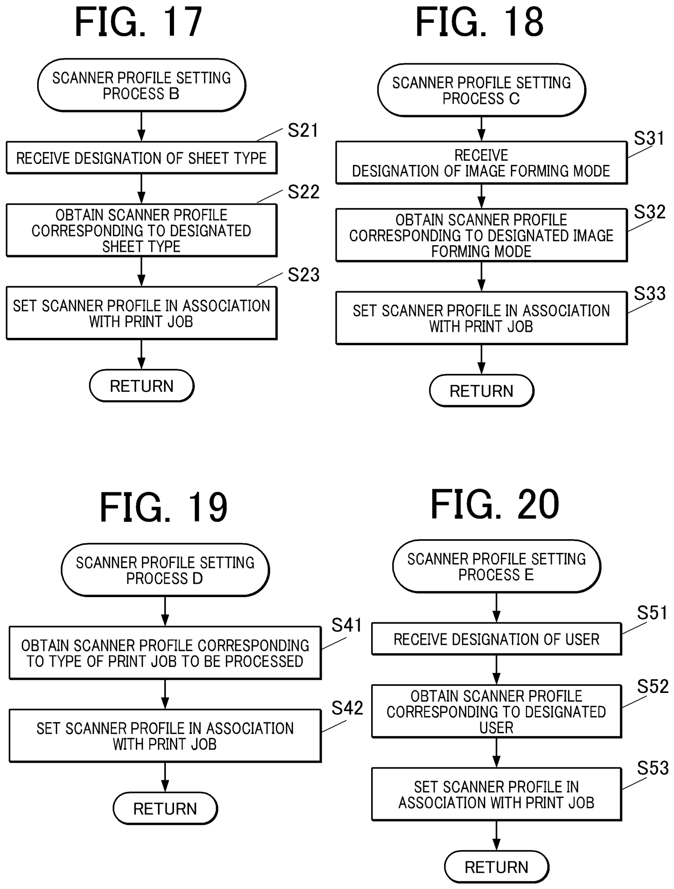

When the radio button 72 corresponding to sheet type designation is selected in the screen 70 (FIG. 14), the CPU 11 executes a scanner profile setting process B in FIG. 17.

In the scanner profile setting process B, the CPU 11 receives designation of the sheet type (step S21). For example, the CPU 11 displays sheet types as a pull-down menu on the display part 13. The operator designates one of the sheet types from the pull-down menu by operating the operation part 14.

Note that the sheet type is normally set on a general setting screen related to job setting (e.g., print setting screen). Therefore, if the CPU 11 can obtain information on the sheet type from the already set information, the process of step S21 is unnecessary.

Next, the CPU 11 obtains the scanner profile corresponding to the designated sheet type (step S22). Specifically, the CPU 11 refers to the correspondence table T2 and obtains the profile name corresponding to the designated sheet type. The CPU 11 may further refer to the correspondence table T1 to obtain the profile data corresponding to the profile name.

Next, the CPU 11 sets the obtained scanner profile in association with the print job (step S23).

After step S23, the CPU 11 proceeds to step S3 of the inspection process (FIG. 12).

When the radio button 73 corresponding to "image forming mode designation is selected in the screen 70 (FIG. 14), the CPU 11 executes a scanner profile setting process C in FIG. 18.

In the scanner profile setting process C, the CPU 11 receives designation of an image forming mode (step S31). For example, the CPU 11 displays image forming modes as a pull-down menu on the display part 13. The operator specifies one of the image forming modes from the pull-down menu by operating the operation part 14.

The image forming mode is normally set on a general setting screen (for example, a print setting screen) related to job setting. Therefore, when the CPU 11 can obtain the information on the image forming mode from the already set information, the process of step S31 is unnecessary.

Next, the CPU 11 obtains the scanner profile corresponding to the designated image forming mode (step S32). Specifically, the CPU 11 refers to the correspondence table T3 and obtains the profile name corresponding to the designated image forming mode. The CPU 11 may further refer to the correspondence table T1 to obtain the profile data corresponding to the profile name.

Next, the CPU 11 sets the obtained scanner profile in association with the print job (step S33).

After step S33, the CPU 11 proceeds to step S3 of the inspection process (refer to FIG. 12).

When the radio button 74 corresponding to print job type designation is selected in the screen 70 (see FIG. 14), the CPU 11 executes a scanner profile setting process D in FIG. 19.

In the scanner profile setting process D, the CPU 11 obtains a scanner profile corresponding to the type of the print job to be processed (step S41). Specifically, the CPU 11 refers to the correspondence table T4 and obtains the profile name corresponding to the type of the print job to be processed. The CPU 11 may further refer to the correspondence table T1 to obtain the profile data corresponding to the profile name.

The CPU 11 may display options of print job types as a pull-down menu on the display part 13 and allows the operator to designate one.

The CPU 11 sets the obtained scanner profile in association with the print job (step S42).

After step S42, the CPU 11 proceeds to step S3 of the inspection process (FIG. 12).

When the radio button 75 corresponding to user designation is selected in the screen 70 (FIG. 14), the CPU 11 executes a scanner profile setting process E in FIG. 20.

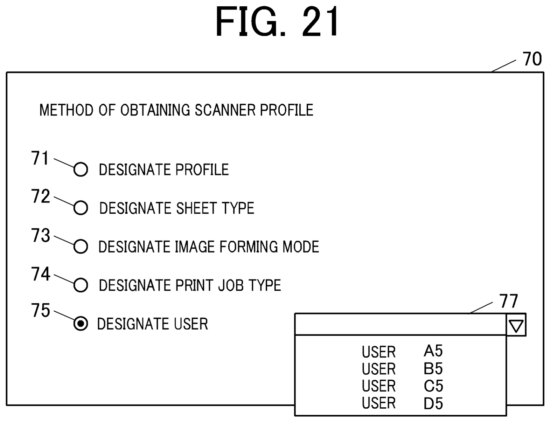

In the scanner profile setting process E, the CPU 11 receives designation of a user (step S51). Specifically, as illustrated in FIG. 21, the CPU 11 displays a user designation field 77 on the screen 70. The CPU 11 reads out user names stored in the storage section 12 (the correspondence table T5). The CPU 11 displays the user names as a pull-down menu in the user designation field 77. The CPU 11 may obtain user names stored in the storage section 32 of the image forming apparatus 30. The operator designates one of the user names from the pull-down menu by operating the operation part 14.

If users are associated with print jobs beforehand, designation of a user in step S51 is unnecessry.

Next, the CPU 11 obtains the scanner profile corresponding to the designated user (step S52). Specifically, the CPU 11 refers to the correspondence table T5 and obtains the profile name corresponding to the designated user. The CPU 11 may further refer to the correspondence table T1 to obtain the profile data corresponding to the profile name.

Next, the CPU 11 sets the obtained scanner profile in association with the print job (step S53).

After step S53, the CPU 11 proceeds to step S3 of the inspection process (FIG. 12).

As described above, in step S2 of the inspection process, the CPU 11 sets a scanner profile in association with the print job (inspection job) selected in step S1.

Referring back to FIG. 12, the CPU 11 of the PC 10 sends the print job to which the scanner profile has been set to the image forming apparatus 30 via the communication section 15 (step S3). Note that RIP processing and so forth related to the print job is performed by the printer controller 20. Specifically, the CPU 11 of the PC 10 sends the print job to which the scanner profile has been set to the printer controller 20 via the communication section 15. The CPU 21 of the printer controller 20 performs RIP processing and so forth on the print data and sends the processed image data (raster data) to the image forming apparatus 30 via the communication section 25.

The CPU 31 of the image forming apparatus 30 obtains the print job to which the scanner profile has been set from the PC 10 via the communication section 35. The CPU 31 may obtain the print job to which the scanner profile has been set via the printer controller 20. The CPU 31 stores information indicating the correspondence between the print job and the scanner profile in the storage section 32. Based on the raster data related to the print job, the CPU 31 controls the image forming section 36 to form an image on a sheet (step S4). In step S4, the CPU 31 generates a printed material of one sheet.

Next, the CPU 31 controls the inline scanner 39 to read the printed material on which the image has been formed (step S5). The CPU 31 obtains read data (RGB values) of the printed material from the inline scanner 39.

Next, the CPU 31 converts the read data (RGB values) of the printed material into colorimetric values (L*a*b* values) using the scanner profile associated with the print job (step S6). The storage section 32 stores scanner profiles that can be set by the PC 10. For example, based on identification information (e.g., profile name) of the scanner profile added to the print job, the CPU 31 identifies the scanner profile to be used from the scanner profiles stored in the storage section 32.

Next, the CPU 31 inspects the printed material based on the read data converted into the colorimetric values (step S7). For example, the CPU 31 determines whether the image has been correctly formed by comparing the read data of the printed material (colorimetric values) with reference image data. The reference image data may be document data used for image formation or may be data obtained by reading a printed material on which an image has been correctly formed and converting the read data into colorimetric values. in inspecting the printed material, when determining that the printed material has not been printed as intended, the CPU 31 ejects the inspected printed material as a waste sheet to a tray different from a normal ejection tray.

The CPU 31 determines whether the job has been completed (step S8). If the job is not completed (step S8: NO), the CPU 31 returns to step S4. The process of step S4 to step S7 may temporally overlap with the previous or later process of step S4 to step S7.

When the job is completed (step S8: YES), the inspection process ends.

According to the first embodiment, the CPU 11 of the PC 10 sets a scanner profile in association with a print job. Thus, the CPU 31 of the image forming apparatus 30 can use the scanner profile suitable for the print job in processing read data of a printed material on which an image has been formed by the print job. Therefore, the color management system 100 can use a suitable scanner profile for each print job.

For example, when the CPU 11 of the PC 10 receives designation of a scanner profile by the user, the CPU 11 can set the scanner profile designated by the operator in association with the print job.

When receiving designation of the sheet type, the CPU 11 sets the scanner profile corresponding to the designated sheet type in association with the print job. Thus, the CPU 11 can set the scanner profile suitable for the sheet type of the print job in association with the print job.

When receiving designation of the image forming mode, the CPU 11 sets the scanner profile corresponding to the designated image forming mode in association with the print job. Thus, the CPU 11 can set the scanner profile suitable for the image forming mode in the print job in association with the print job.

The CPU 11 sets the scanner profile corresponding to the type of a print job to be processed in association with the print job. Thus, the CPU 11 can set the scanner profile suitable for the print job type in association with the print job.

When receiving designation of the user, the CPU 11 sets the scanner profile corresponding to the designated user in association with the print job. Thus, the CPU 11 can set a scanner profile suitable for the user corresponding to the print job in association with the print job.

In particular, in the first embodiment, the CPU 11 of the PC 10 can set a scanner profile in association with an inspection print job.

For another example, the CPU 31 of the image forming apparatus 30 may obtain information on a scanner profile for converting read data of a printed material on which an image has been formed by a print job; and based on the obtained information on the scanner profile, the CPU 31 may set the scanner profile in association with the print job.

### [Second Embodiment]

Next, a second embodiment of the present disclosure will be described.

The color management system in the second embodiment has the same configuration as the color management system 100 in the first embodiment. The same constituent elements as those of the first embodiment are denoted by the same reference signs, and description thereof is omitted. Hereinafter, a characteristic configuration and process of the second embodiment will be described.

In the second embodiment, the color management apparatus 50 is a print job management apparatus according to the present disclosure.

In the second embodiment, color parameter creation for the image forming apparatus 30 will be described as an operation mode in which the image forming apparatus 30 uses the inline scanner 39.

In the second embodiment, the print job is a job for creating color parameters (a color parameter creation job).

The CPU 51 (hardware processor) of the color management apparatus 50 manages print jobs to be executed by the image forming section 36 (image forming engine) of the image forming apparatus 30. The CPU 51 sets a scanner profile in association a the print job.

The CPU 51 obtains information of a first scanner profile. The first scanner profile is for converting read data of a printed material on which an image has been formed in a first print job. Based on the obtained information on the first scanner profile, the CPU 51 sets the first scanner profile in association with the first print job.

The CPU 51 obtains information on a second scanner profile. The second scanner profile is for converting read data of a printed material on which an image has been formed in a second print job. Based on the obtained information on the second scanner profile, the CPU 51 sets the second scanner profile in association with the second print job.

The image forming section 36 of the image forming apparatus 30 prints a predetermined color parameter creation chart (patches). The inline scanner 39 of the image forming apparatus 30 reads the color parameter creation chart (printed material) and generates read data.

The CPU 51 of the color management apparatus 50 creates the color parameters of the image forming apparatus 30, based on the read data of the color parameter creation chart. The color parameters include an ICC profile, maximum density setting, one-dimensional table, and density balance table.

The ICC profile is a series of data that conforms to the ICC standard and that indicates color characteristics of color-related input/output devices. Herein, as the ICC profile, the CPU 51 creates a printer profile and a device-link profile of the image forming apparatus 30.

The maximum density setting is setting information for adjusting the maximum density for each of CMYKW colors.

The one-dimensional table is a table or a tone curve that indicates the correspondence between inputs and outputs for each of CMYKW colors.

The density balance table is a correction table for suppressing in-plane unevenness for each of CMYKW colors.

The storage section 52 of the color management apparatus 50 stores the correspondence tables T1 to T5. The correspondence table T1 to T5 are the same as those illustrated in FIG. 7 to FIG. 11.

Next, the operation of the color management system 100 according to the second embodiment will be described.

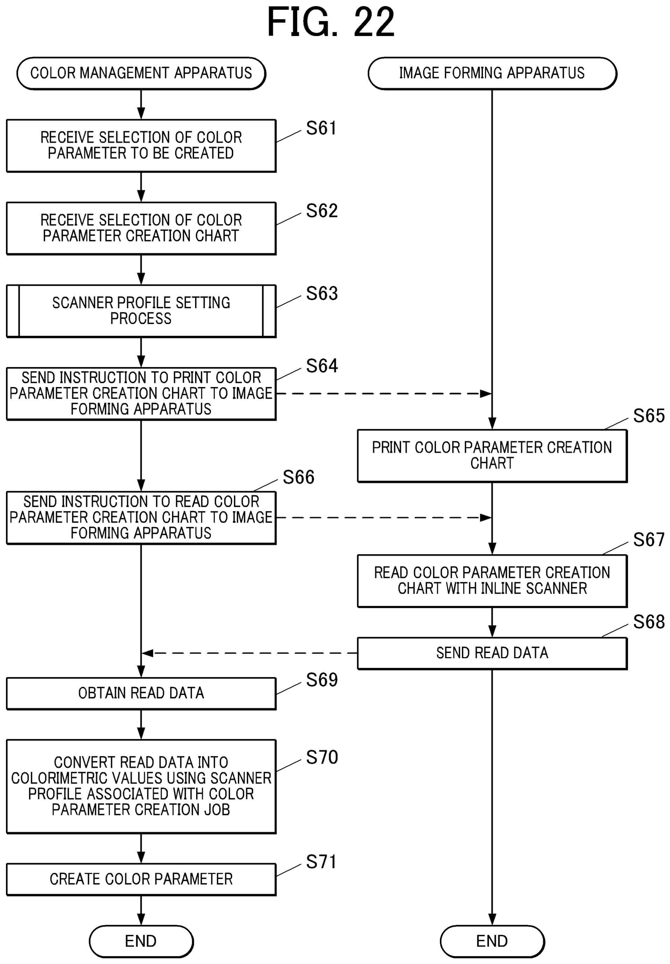

FIG. 22 is a ladder chart of a color parameter creation process to be executed by the color management apparatus 50 and the image forming apparatus 30 in the second embodiment.

First, the CPU 51 of the color management apparatus 50 receives selection of a color parameter to be created (step S61). For example, the CPU 51 displays types of color parameters on the display part 53. The operator selects one of the color parameters by operating the operation part 54.

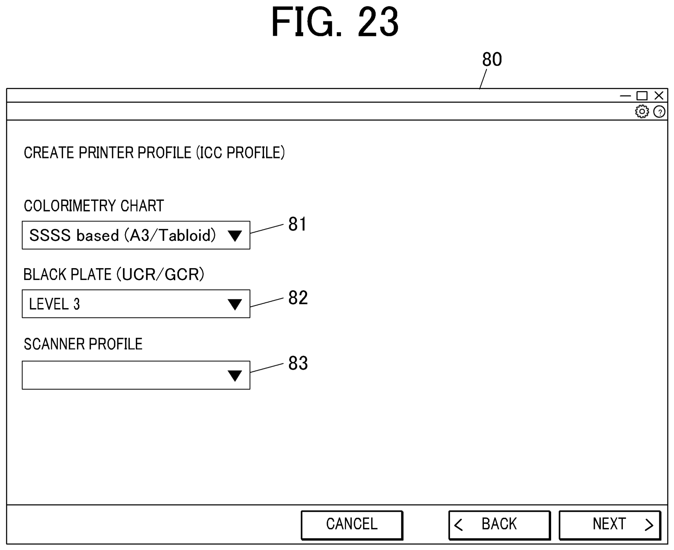

Next, the CPU 51 receives selection of a color parameter creation chart (step S62). For example, as illustrated in FIG. 23, the CPU 51 displays a screen 80 for creating a color parameter on the display part 53. The screen 80 includes a chart- for-colorimetry selection field 81, a black plate level selection field 82, and a scanner profile selection field 83.

The chart- for-colorimetry selection field 81 is for selecting a chart for colorimetry (color parameter creation chart). The operator selects one of the colorimetry charts in the chart-for-colorimetry selection field 81 by operating the operation part 54.

The black plate level selection field 82 is for selecting a level of UCR/GCR. UCR (under color removal) refers to replacing CMY in shadow portions with a black plate (K). GCR (gray component replacement) refers to replacing CMY in highlight portions and shadow portions (i.e., all the gradation portions) with a black plate (K). The operator selects the level in the black plate level selection field 82 by operating the operation part 54.

The scanner profile selection field 83 is for selecting a scanner profile. If the operator wants to directly specify a scanner profile, the operator selects one of the scanner profiles in the scanner profile selection field 83 by operating the operation part 54.

Next, the CPU 51 executes the scanner profile setting process (step S63). The process of step S63 is the same as the process of step S2 in the inspection process (FIG. 12) except that the subject of the operation is the CPU 51. Details of the scanner profile setting process are also the same as the scanner profile setting process A to E (FIG. 15, FIG. 17 to FIG. 20) except that the subject of the operation is the CPU 51. The CPU 51 sets a scanner profile in association with a print job for creating the color parameter selected in step S61 (color parameter creation job). The CPU 51 stores information indicating the correspondence between the color parameter creation job and the scanner profile in the storage section 52.

When the scanner profile is selected in the scanner profile selection field 83 in FIG. 23, the CPU 51 executes the scanner profile setting process A. In this case, in step S11, the scanner profile selected in the scanner profile selection field 83 is designated.

Next, the CPU 51 sends an instruction to print the chart (color parameter creation chart) to the image forming apparatus 30 via the communication section 55 (step S64). The instruction to print the chart may be sent from the color management apparatus 50 to the image forming apparatus 30 via the printer controller 20 as necessary.

The CPU 31 of the image forming apparatus 30 obtains the instruction to print the chart from the color management apparatus 50 via the communication section 35. Based on the instruction to print the chart, the CPU 31 controls the image forming section 36 to print the color parameter creation chart on a sheet (step S65).

Next, the CPU 51 of the color management apparatus 50 sends an instruction to read the hart (color parameter creation chart) to the image forming apparatus 30 via the communication section 55 (step S66).

The CPU 31 of the image forming apparatus 30 obtains the instruction to read the chart from the color management apparatus 50 via the communication section 35. The CPU 31 controls the inline scanner 39 to read the color parameter creation chart (printed material) (step S67). The CPU 31 obtains the read data (RGB values) of the chart from the inline scanner 39.

Next, the CPU 31 sends the read data (color parameter creation chart) to the color management apparatus 50 via the communication section 35 (step S68).

The CPU 51 of the color management apparatus 50 obtains the read data of the chart from the image forming apparatus 30 via the communication section 55 (step S69).

Next, the CPU 51 converts the read data of the color parameter creation chart (RGB values) into colorimetric values (L*a*b* values) using the scanner profile associated with the color parameter creation job (step S70).

Based on the read data of the color parameter creation chart (colorimetric values), the CPU 51 creates the color parameter selected in step S61 (step S71). For each patch constituting the color parameter creation chart, a target value (L*a*b value) is determined beforehand.

The CPU 51 creates the color parameter, based on the differences between the reading results (colorimetric values) and the target values of the respective patches. For example, the CPU 51 creates a printer profile, a device-link profile, and so forth for the image forming apparatus 30. The CPU 51 may also create maximum density setting, a one-dimensional table, and a density balance table for the image forming apparatus 30. The CPU 51 sends the created color parameter to the image forming apparatus 30 via the communication section 55.

The CPU 31 of the image forming apparatus 30 stores the color parameter in the storage section 32.

Thus, the color parameter creation process ends.

According to the second embodiment, the CPU 51 of the color management apparatus 50 sets a scanner profile in association with a print job. Thus, the CPU 51 can use the scanner profile suitable for the print job in processing read data of a printed material on which an image has been formed by the print job. Therefore, the CPU 51 can use a scanner profile suitable for each print job.

For example, when the CPU 51 receives designation of a scanner profile by the operator, the CPU 51 can set the scanner profile designated by the operator in association with the print job.

When receiving designation of the sheet type, the CPU 51 sets the scanner profile corresponding to the designated sheet type in association with the print job. Thus, the CPU 51 can set the scanner profile suitable for the sheet type of the print job in association with the print job.

When receiving designation of the image forming mode, the CPU 51 sets the scanner profile corresponding to the designated image forming mode in association with the print job. Thus, the CPU 51 can set the scanner profile suitable for the image forming mode in the print job in association with the print job.

The CPU 51 sets the scanner profile corresponding to the type of a print job to be processed in association with the print job. Thus, the CPU 51 can set the scanner profile suitable for the print job type in association with the print job.

When receiving designation of the user, the CPU 51 sets the scanner profile corresponding to the designated user in association with the print job. Thus, the CPU 11 can set the scanner profile suitable for the user corresponding to the print job in association with the print job.

In particular, in the second embodiment, the CPU 51 can set a scanner profile in association with a print job for creating color parameters.

In step S70 of the color parameter creation process (FIG. 22), the color management apparatus 50 converts the read data into colorimetric values. For another example, the image forming apparatus 30 may convert the read data into colorimetric values. In this case, after step S63 and before step S68, the CPU 51 of the color management apparatus 50 sends information indicating the correspondence between the color parameter creation job and the scanner profile to the image forming apparatus 30 via the communication section 55. Then, in step S68, the CPU 31 of the image forming apparatus 30 converts the read data into colorimetric values using the scanner profile associated with the color parameter creation job and sends the converted read data to the color management apparatus 50 via the communication section 35. The CPU 51 of the color management apparatus 50 creates the color parameter, based on the read data converted into colorimetric values by the image forming apparatus 30.

### [Third Embodiment]

Next, a third embodiment of the present disclosure will be described.

The color management system in the third embodiment has the same configuration as the color management system 100 in the first embodiment. The same constituent elements as those of the first embodiment are denoted by the same reference signs, and description thereof is omitted.

In the third embodiment, the color management apparatus 50 is a print job management apparatus according to the present disclosure, as in the second embodiment. Hereinafter, aspects of the third embodiment different from the second embodiment will be mainly described.

In the third embodiment, color verification for the image forming apparatus 30 will be described as an operation mode in which the image forming apparatus 30 uses the inline scanner 39.

In the third embodiment, the print job is a job for color verification (color verification job).

The image forming section 36 of the image forming apparatus 30 prints a predetermined color verification chart (patches). The inline scanner 39 of the image forming apparatus 30 reads the color verification chart (printed material) and generates read data.

Based on the read data of the color verification chart, the CPU 51 of the color management apparatus 50 verifies whether the colors reproduced by the image forming apparatus 30 comply with the standard.

Next, the operation of the color management system 100 in the third embodiment will be described.

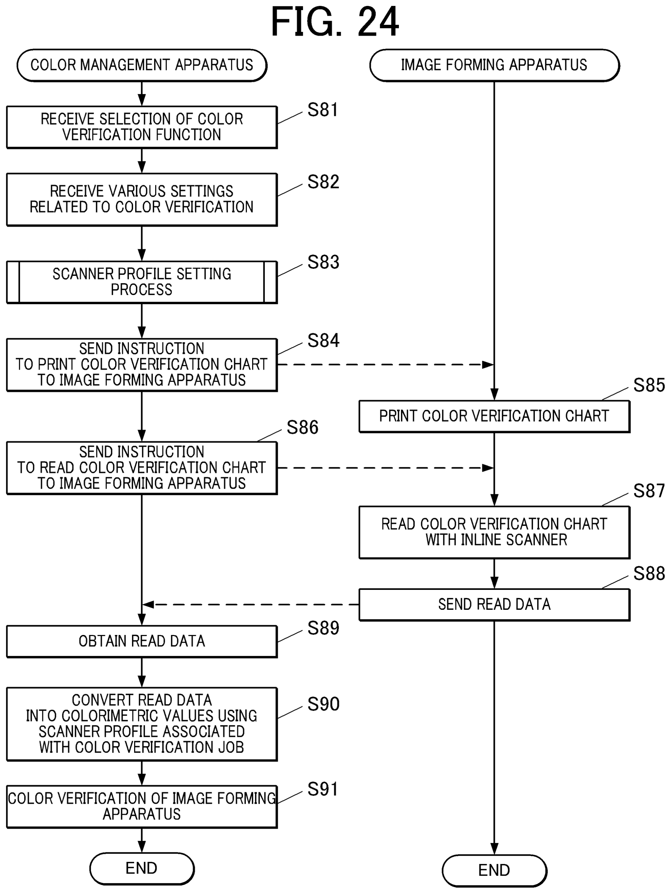

FIG. 24 is a ladder chart of a color verification process to be executed by the color management apparatus 50 and the image forming apparatus 30.

First, the CPU 51 of the color management apparatus 50 receives selection of a color verification function (step S81). For example, the CPU 51 displays a menu screen on the display part 53. The operator selects a color verification function by operating the operation part 54.

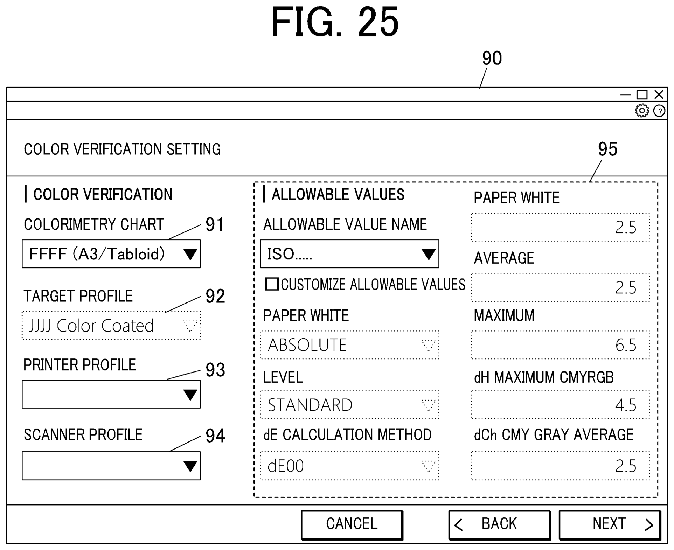

Next, the CPU 51 receives various settings related to color verification (step S82). For example, as illustrated in FIG. 25, the CPU 51 displays a setting screen 90 related to color verification on the display part 53. The setting screen 90 includes a colorimetry chart selection field 91, a target profile selection field 92, a printer profile selection field 93, a scanner profile selection field 94, and an allowable value setting field 95.

The colorimetry chart selection field 91 is for selecting a colorimetry chart (color verification chart). The operator selects one of the colorimetry charts in the colorimetry chart selection field 91 by operating the operation part 54.

The target profile selection field 92 is for selecting a target profile. The operator selects one of the target profiles in the target profile selection field 92 by operating the operation part 54.

The printer profile selection field 93 is for selecting a printer profile. The operator selects one of the printer profiles in the printer profile selection field 93 by operating the operation part 54.

The scanner profile selection field 94 is for selecting a scanner profile. When the operator wants to directly designate a scanner profile, the operator selects one of the scanner profiles in the scanner profile selection field 94 by operating the operation part 54.

The allowable value setting field 95 is for setting an allowable value for each item. The operator may collectively perform various settings related to allowable values by selecting an allowable value name in the allowable value setting field with the operation part 54. For another example, the operator may set the allowable values of the individual items with the operation part 54.

Next, the CPU 51 executes the scanner profile setting process (step S83). The process of step S83 is the same as the process of step S63 in the color parameter creation process (FIG. 22). Details of the scanner profile setting process are the same as the scanner profile setting process A to E (FIG. 15, FIG. 17 to FIG. 20) except that the subject of the operation is the CPU 51. The CPU 51 sets a scanner profile in association with a print job for color verification (color verification job). The CPU 51 stores information indicating the correspondence between the color verification job and the scanner profile in the storage section 52.

When the scanner profile is selected in the scanner profile selection field 94 in FIG. 25, the CPU 51 executes the scanner profile setting process A. In this case, in step S11, the scanner profile selected in the scanner profile selection field 94 is designated.

The process of step S84 to step S89 is the same as the process of step S64 to step S69 in the color parameter creation process (refer to FIG. 22) except that the chart is the color verification chart.

After step S89, the CPU 51 converts the read data of the color verification chart (RGB values) into colorimetric values (L*a*b* values) using the scanner profile associated with the color verification job (step S90).

Next, the CPU 51 performs color verification of the image forming apparatus 30, based on the read data of the color verification chart (colorimetric values) (step S91). Specifically, the CPU 51 compares the colorimetric values of the chart printed by the image forming apparatus 30 with the color verification standard and the allowable values of the respective items and determines whether the colors printed by the image forming apparatus 30 satisfy the color verification criteria. The CPU 51 stores the determination result in the storage section 52 and displays the determination result on the display part 53.

Thus, the color verification process ends.

According to the third embodiment, the CPU 51 of the color management apparatus 50 sets a scanner profile in association with a print job. Thus, the CPU 51 can use the scanner profile suitable for the print job in processing read data of a printed material on which an image has been formed by the print job. Therefore, the CPU 51 can use a scanner profile suitable for each print job.

The advantageous effects corresponding to the scanner profile obtainment methods are also the same as those of the second embodiment.

In particular, in the third embodiment, the CPU 51 can set a scanner profile in association with a print job for color verification.

In step S90 of the color verification process (see FIG. 24), the color management apparatus 50 converts the read data into colorimetric values. For another example, the image forming apparatus 30 may convert the read data into colorimetric values. In this case, after step S83 and before step S88, the CPU 51 of the color management apparatus 50 sends information indicating the correspondence between the color verification job and the scanner profile to the image forming apparatus 30 via the communication section 55. Then, in step S88, the CPU 31 of the image forming apparatus 30 converts the read data into colorimetric values using the scanner profile associated with the color verification job and sends the converted read data to the color management apparatus 50 via the communication section 35. The CPU 51 of the color management apparatus 50 performs color verification, based on the read data converted into colorimetric values by the image forming apparatus 30.

### [Fourth Embodiment]

Next, a fourth embodiment of the present disclosure will be described.

The color management system in the fourth embodiment has the same configuration as the color management system 100 in the first embodiment. The same constituent elements as those of the first embodiment are denoted by the same reference signs, and description thereof is omitted.

In the fourth embodiment, the color management apparatus 50 is a print job management apparatus according to the present disclosure, as in the second embodiment. Hereinafter, aspects of the fourth embodiment different from the second embodiment will be mainly described.

In the fourth embodiment, color matching based on a color sample (target output product) will be described as an operation mode in which the image forming apparatus 30 uses the inline scanner 39. The color sample is an output material received from the customer. The color sample is not data but an actual output material. In the fourth embodiment, the colors of the image forming apparatus 30 are adjusted so that an intended printed material is generated, with the color sample as a target.

The platen scanner 37 of the image forming apparatus 30 reads the color sample.

The CPU 51 of the color management apparatus 50 creates a target profile based on the read data of the color sample and the document data corresponding to the color sample. The document data corresponding to the color sample is image data (CMYK values) input to the target printing machine to print the color sample.

The image forming section 36 of the image forming apparatus 30 prints a printer profile creation chart (patches). The inline scanner 39 of the image forming apparatus 30 reads the printer profile creation chart (printed material) and generates read data.

The CPU 51 of the color management apparatus 50 creates the printer profile of the image forming apparatus 30, based on the read data of the printer profile creation chart.

The CPU 51 combines the target profile and the printer profile to create a device-link profile.

Next, the operation of the color management system 100 according to the fourth embodiment will be described.

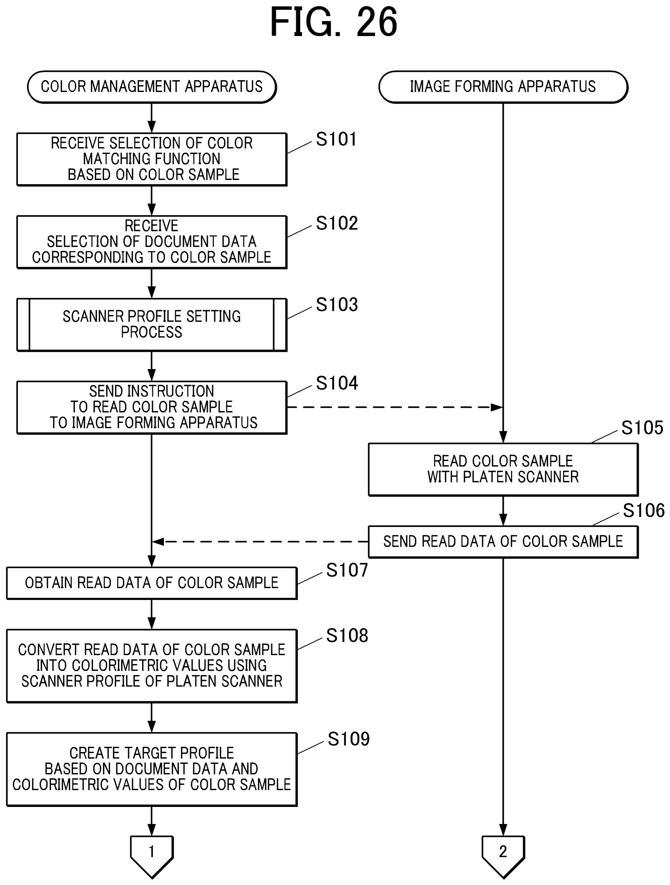

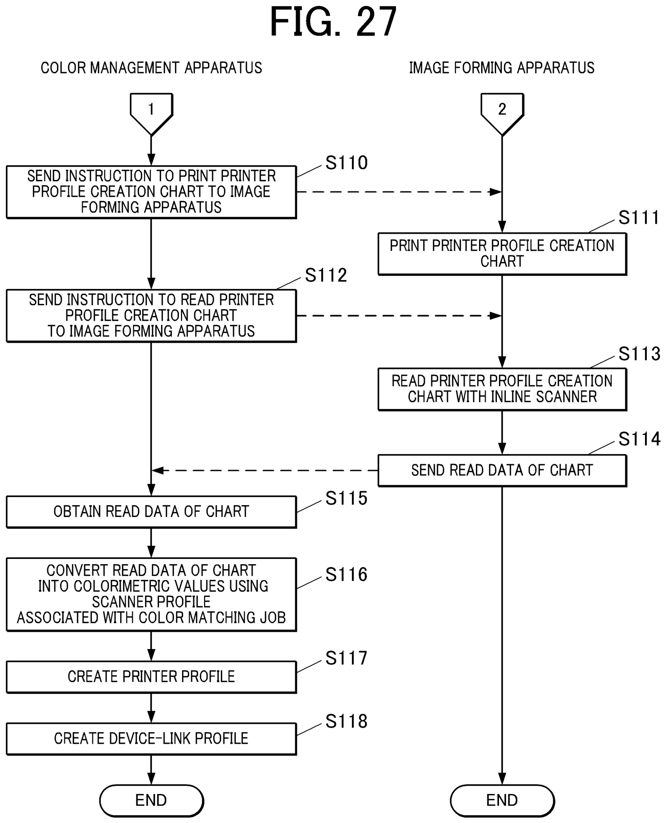

FIG. 26 and FIG. 27 illustrate the ladder chart of a color matching process based on the color sample, which is executed by the color management apparatus 50 and the image forming apparatus 30.

First, the CPU 51 of the color management apparatus 50 receives selection of a color matching function based on the color sample (step S101). For example, the CPU 51 displays a menu screen on the display part 53. The operator selects a color matching function based on the color sample by operating the operation part 54.

Next, the CPU 51 receives selection of document data corresponding to the color sample (step S102). For example, the CPU 51 displays candidates for the document data on the display part 53. The operator selects document data corresponding to the color sample by operating the operation part 54.

Next, the CPU 51 executes the scanner profile setting process (step S103). The process of step S103 is the same as the process of step S63 in the color parameter creation process (FIG. 22). Details of the scanner profile setting process are the same as the scanner profile setting process A to E (FIG. 15, FIG. 17 to FIG. 20) except that the subject of the operation is the CPU 51. The CPU 51 sets a scanner profile in association with a print job for color matching based on the color sample (color matching job). The CPU 51 stores information indicating the correspondence between the color matching job and the scanner profile in the storage section 52.

Next, the CPU 51 displays, on the display part 53, a message to set the color sample on the platen scanner 37 of the image forming apparatus 30. The CPU 51 sends an instruction to read the color sample on the platen scanner 37 to the image forming apparatus 30 via the communication section 55 (step S104).

The CPU 31 of the image forming apparatus 30 obtains the instruction to read the color sample from the color management apparatus 50 via the communication section 35. The CPU 31 controls the platen scanner 37 to read the color sample (step S105). The CPU 31 obtains the read data of the color sample (RGB values) from the platen scanner 37.

Next, the CPU 31 sends the read data of the color sample to the color management apparatus 50 via the communication section 35 (step S106).

The CPU 51 of the color management apparatus 50 obtains the read data of the color sample from the image forming apparatus 30 via the communication section 55 (step S107).

Next, the CPU 51 converts the read data of the color sample (RGB values) into colorimetric values (L*a*b* values) using the scanner profile of the platen scanner 37 (step S108). Note that the scanner profile of the platen scanner 37 is reliable. For another example, the CPU 51 may obtain the colorimetric values of the color sample (L*a*b* values) from a colorimeter connected to the color management apparatus 50.

Next, the CPU 51 creates a target profile based on the document data selected in step S102 and the colorimetric values of the color sample obtained in step S108 (step S109). The target profile is information indicating the correspondence between the document data of the color sample (CMYK values) and the colorimetric values obtained from the color sample (L*a*b values). The CPU 51 creates a table in which the CMYK values of the document data and the L*a*b values of the color sample at corresponding positions are associated with each other and, based on the table, creates the target profile for matching with the colors of the color sample.

Next, the CPU 51 proceeds to FIG. 27. The CPU 51 sends an instruction to print the chart (printer profile creation chart) to the image forming apparatus 30 via the communication section 55 (step S110). The instruction to print the chart may be sent from the color management apparatus 50 to the image forming apparatus 30 via the printer controller 20 as necessary.

The CPU 31 of the image forming apparatus 30 obtains the instruction to print the chart from the color management apparatus 50 via the communication section 35. based on the instruction to print the chart, the CPU 31 controls the image forming section 36 to print the printer profile creation chart on a sheet (step S111).

Next, the CPU 51 of the color management apparatus 50 sends an instruction to read the printer profile creation chart to the image forming apparatus 30 via the communication section 55 (step S112).

The CPU 31 of the image forming apparatus 30 obtains the instruction to read the chart from the color management apparatus 50 via the communication section 35. The CPU 31 controls the inline scanner 39 to read the printer profile creation chart (printed material) (step S113). The CPU 31 obtains the read data (RGB values) of the chart from the inline scanner 39.

Next, the CPU 31 sends the read data of the printer profile creation chart to the color management apparatus 50 via the communication section 35 (step S114).

The CPU 51 of the color management apparatus 50 obtains the read data of the chart from the image forming apparatus 30 via the communication section 55 (step S115).

Next, the CPU 51 converts the read data of the printer profile creation chart (RGB values) into colorimetric values (L*a*b* values) using the scanner profile associated with the color matching job (step S 116).

Next, the CPU 51 creates (corrects) the printer profile, based on the read data of the printer profile creation chart (colorimetric values) (step S117). The printer profile is information indicating the correspondence between print image data (CMYK values) to be output to the image forming section 36 and colorimetric values (L*a*b* values) of the printed material on which an image has been formed by the image forming section 36 in the image forming apparatus 30.

Next, the CPU 51 combines the target profile and the printer profile to create the device-link profile (step S118). The CPU 51 sends the created printer profile and device-link profile to the image forming apparatus 30 via the communication section 55.

The CPU 31 of the image forming apparatus 30 stores the printer profile and the device-link profile in the storage section 32.

Then the color matching process based on the color sample ends.

The CPU 31 of the image forming apparatus 30 uses the device-link profile when forming an image based on document data corresponding to the color sample. That is, by using the device-link profile, the CPU 31 converts the document data (CMYK values) into print image data (CMYK values) to be output to the image forming section 36. Accordingly, the colors of the printed material by the image forming apparatus 30 match the color sample.

According to the fourth embodiment, the CPU 51 of the color management apparatus 50 sets a scanner profile in association with a print job. Thus, the CPU 51 can use the scanner profile suitable for the print job in processing read data of a printed material on which an image has been formed by the print job. Therefore, the CPU 51 can use a scanner profile suitable for each print job.

The advantageous effects corresponding to the scanner profile obtainment methods are also the same as those of the second embodiment.

In particular, in the fourth embodiment, the CPU 51 can set a scanner profile in association with a print job for color matching based on a color sample.

In the color matching process based on the color sample (FIG. 26 and FIG. 27), the color management apparatus 50 converts the read data into colorimetric values in step S116. For another example, the image forming apparatus 30 may convert the read data into colorimetric values. In this case, after step S103 and before step S114, the CPU 51 of the color management apparatus 50 sends information indicating the correspondence between the color matching job and the scanner profile to the image forming apparatus 30 via the communication section 55. Then, in step S114, the CPU 31 of the image forming apparatus 30 converts the read data into colorimetric values using the scanner profile associated with the color matching job and sends the converted read data to the color management apparatus 50 via the communication section 35. The CPU 51 of the color management apparatus 50 creates the printer profile, based on the read data converted into colorimetric values by the image forming apparatus 30.

### [Fifth Embodiment]

Next, a fifth embodiment of the present disclosure will be described.

The color management system in the fifth embodiment has the same configuration as the color management system 100 in the first embodiment. The same constituent elements as those of the first embodiment are denoted by the same reference signs, and description thereof is omitted. Hereinafter, a characteristic configuration and process of the fifth embodiment will be described.

In the first to fourth embodiments, the scanner profile is associated with the entire print job.

In the fifth embodiment, a printed material on which an image is formed in a print job consists of multiple pages, and each of the pages is associated with a scanner profile.

In the fifth embodiment, the PC 10 (printer driver) is the print job management apparatus according to the present disclosure, as with the first embodiment.

The CPU 11 of the PC 10 obtains information on the scanner profile for each page constituting the target print job.

Based on the obtained information of the scanner profile, the CPU 11 sets the scanner profile in association with the page included in the target print job.

When a print job includes multiple pages, the front page, the frontispiece, and/or the cover art may be printed with special printing (e.g., special color toner, foil stamping) or with color sheets In such a case, if the same scanner profile is used for all the pages, the inline scanner 39 cannot accurately read some pages. To deal with this, in the fifth embodiment, the scanner profile is set for each page.

The operation of the color management system 100 in the fifth embodiment will be described.

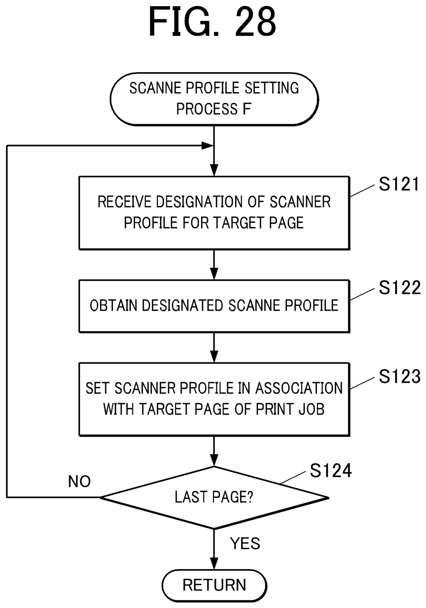

In the fifth embodiment, the process similar to the inspection process in FIG. 12 is performed by the PC 10 and the image forming apparatus 30. However, in step S2, the CPU 11 of the PC 10 executes a scanner profile setting process F in FIG. 28.

In the scanner profile setting process F, the CPU 11 receives designation of a scanner profile for a target page (step S121). The CPU 11 determines the target page in the order of pages included in the print job. The method of designating the scanner profile is the same as step S11 of the scanner profile setting process A (FIG. 15).

Next, the CPU 11 obtains the designated scanner profile (step S122). The CPU 11 may obtain the profile name of the designated scanner profile or may obtain the profile data of the designated scanner profile.

Next, the CPU 11 sets the obtained scanner profile in association with the target page of the print job (step S123). For example, the CPU 11 stores information indicating the correspondence between the target page of the print job and identification information of the scanner profile (e.g., profile name) in the storage section 12.

The CPU 11 determines whether the target page is the last page of the print job (step S124). If the target page is not the last page of the print job (step S124: NO), the CPU 11 returns to step S121. The CPU 11 repeats the process of step S121 and subsequent steps for the next target page.

In step S124, when the target page is the last page of the print job (step S124: YES), the scanner profile setting process F ends.

In step S3 of the inspection process (FIG. 12), the CPU 11 of the PC 10 sends the print job to which the scanner profiles have been set for the respective pages to the image forming apparatus 30 via the communication section 15. For example, the CPU 11 sends the print job and information indicating the correspondence between pages and scanner profiles to the image forming apparatus 30.

In step S6 of the inspection process (FIG. 12), the CPU 31 of the image forming apparatus 30 converts read data of the printed material (RGB values) into colorimetric values (L*a*b* values) by using the scanner profile associated with the page of the print job.

According to the fifth embodiment, the CPU 11 of the PC 10 sets a scanner profile in association with a page included in a print job. Thus, the CPU 31 of the image forming apparatus 30 can apply the scanner profile suitable for each page of the print job in processing read data of the printed material on which the image has been formed by the print job. Thus, the color management system 100 can use a suitable scanner profile for each page of the print job.

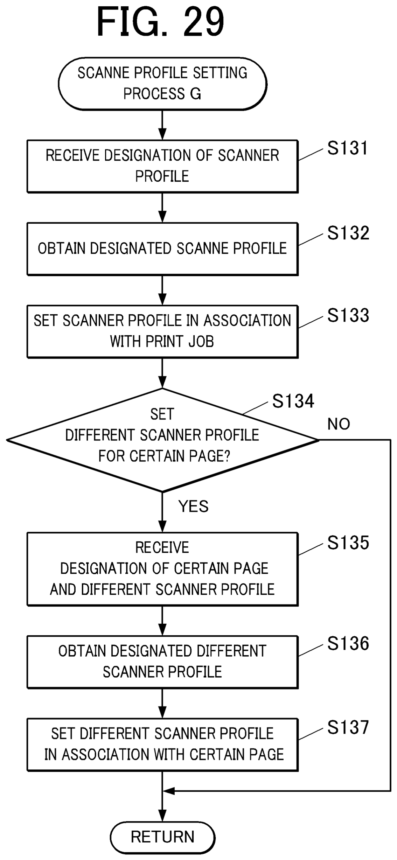

The CPU 11 of the PC 10 may execute a scanner profile setting process G in FIG. 29 instead the scanner profile setting process F in FIG. 28.

In the scanner profile setting process G, a scanner profile is set for the entire print job, whereas if the user wants to process a certain page differently, a different scanner profile is set for the page.

The process of step S131 to step S133 is the same as the process of step S11 to step S13 of the scanner profile setting process A (FIG. 15), and thus the description thereof is omitted.

Next, the CPU 11 determines whether to set a different scanner profile for a certain page (step S134). For example, the CPU 11 displays a setting screen related to a different scanner profile on the display part 13. The operator selects whether to set a different scanner profile for the specific page by operating the operation part 14.

When setting a different scanner profile for the certain page (step S134: YES), the CPU 11 receives designation of the certain page and a different scanner profile (step S135). The operator designates a page for which a different scanner profile is to be set by operating the operation part 14. The operator may designate multiple pages. The method of designating the scanner profile is the same as step S11 of the scanner profile setting process A (FIG. 15). For a page to be differently processed, multiple types of scanner profiles may be individually designated in units of pages.

Next, the CPU 11 obtains the designated different scanner profile (step S136).

Next, the CPU 11 sets the different scanner profile in association with the certain page (step S137). In the information indicating the correspondence between the print job and scanner profile, the CPU 11 changes the scanner profile associated with the certain page.

After step S137 or in step S134, when a different scanner profile is not set for a certain page (step S134: NO), the scanner profile setting process G ends.

In the case of the scanner profile setting process G, the color management system 100 can use the appropriate scanner profile for each page of the print job.

In the scanner profile setting processes F (FIG. 28) and G (FIG. 29), designation of a scanner profile is received as an example. The scanner profile may also be set for each page when designation of a sheet type, an image forming mode, or a user is received. The scanner profile may also be set for each page when the scanner profile corresponding to the type of the target print job is obtained.

The scanner profile setting processes F and G have been described as part of the inspection process (FIG. 12).

The scanner profile may also be set for each page in the color parameter creation process (FIG. 22), the color verification process (FIG. 24), and the color matching process based on a color sample (FIG. 26 and FIG. 27).

The above-described embodiments are examples of the print job management method, the print job management apparatus, and the program according to the present disclosure and not intended to limit the present disclosure. The detailed configuration and operation of each part constituting the apparatuses may be appropriately modified without departing from the scope of the present disclosure.

For example, characteristic processes in the respective embodiments may be combined.

In the above-described embodiments, either the PC 10 (printer driver) or the color management apparatus 50 is the print job management apparatus according to the present disclosure.

For another example, the printer controller 20 connected to the image forming apparatus 30 including the image forming section 36 (image forming engine) may be the print job management apparatus according to the present disclosure. In this case, the CPU 21 of the printer controller 20 sets the scanner profile in association with the print job received from the PC 10. Details of the processing are the same as in the above-described embodiments.

For another example, the image forming apparatus 30 including the image forming section 36 (image forming engine) may be the print job management apparatus according to the present disclosure. In this case, the CPU 31 of the image forming apparatus 30 sets the scanner profile in association with the print job to be processed. Details of the processing are the same as in the above-described embodiments.

Further, in each embodiment, the processing performed by the PC 10 (printer driver) or the color management apparatus 50 may be performed by a different apparatus in the color management system 100 or an apparatus connectable to the color management system 100.

For example, the printer controller 20 or the image forming apparatus 30 may have the function of the color management apparatus 50, or the color management apparatus 50 may be constituted by a single apparatus.

Further, the color management apparatus 50 may only provide the Web application and the user interface, and the PC 10, the printer controller 20, or the image forming apparatus 30 may have the actual functions and data. Further, the PC 10 may only provide the Web application and the user interface, and a different PC, the printer controller 20, or the image forming apparatus 30 may have the actual functions and data.

Further, in each of the above-described embodiments, the inline scanner 39 of the image forming apparatus 30 reads the printed material and generates read data. For another example, the operator may set the printed material on the platen scanner 37 of the image forming apparatus 30 or on an external scanner, and the platen scanner 37 or the external scanner may read the printed material to generate read data. In this case, the scanner profile associated with the print job is the scanner profile of the used scanner.

In the above-described embodiments, the image forming apparatus 30 is an electrophotographic image forming apparatus that forms an image using toner. However, the present disclosure is not limited thereto. The image forming apparatus 30 may use the other printing methods, such as the inkjet method.

The computer-readable medium that stores the program for executing each process is not limited to the above-described example. Further, a carrier wave may be applied as a medium for providing data of the program via a communication line.

Although embodiments of the present invention have been described and illustrated in detail, the disclosed embodiments are made for purposes of illustration and example only and not limitation. The scope of the present invention should be interpreted by terms of the appended claims.

## Claims

1. A print job management method of managing a print job to be executed by an image formation engine (36), the method comprising:
obtaining information on a first scanner profile for converting read data of a printed material on which an image has been formed by a first print job;
setting the first scanner profile in association with the first print job, based on the obtained information on the first scanner profile;
obtaining information on a second scanner profile for converting read data of a printed material on which an image has been formed by a second print job; and
setting the second scanner profile in association with the second print job, based on the obtained information of the second scanner profile.

2. The print job management method according to claim 1, wherein in response to designation of a scanner profile being received, information on a designated scanner profile is obtained.

3. The print job management method according to claim 1, wherein:
scanner profiles are associated with sheet types beforehand, and
in response to designation of a sheet type being received, information on a scanner profile corresponding to the designated sheet type is obtained.

4. The print job management method according to claim 1, wherein:
scanner profiles are associated with image forming modes beforehand, and
in response to designation of an image forming mode being received, information on a scanner profile corresponding to the designated image forming mode is obtained.

5. The print job management method according to claim 1, wherein:
scanner profiles are associated with print job types beforehand, and
information on a scanner profile corresponding to a type of a target print job is obtained.

6. The print job management method according to claim 1, wherein:
scanner profiles are associated with users beforehand, and
in response to designation of a user being received, information on a scanner profile corresponding to the designated user is obtained.

7. The print job management method according to claim 1, wherein:
information on a scanner profile is obtained for each page included in a target print job, and
based on the obtained information on the scanner profile, the scanner profile is set in association with the page included in the target print job.

8. The print job management method according to claim 1, wherein the print job is based on document data.

9. The print job management method according to claim 1, wherein the print job is a job for color verification or a job for creating a color parameter.

10. A print job management apparatus (10, 20, 30, 50) comprising a hardware processor (11, 21, 31, 51) that executes the print job management method according to any one of claims 1 to 9.

11. The print job management apparatus according to claim 10, wherein the print job management apparatus is a personal computer (10) in which a printer driver (121) has been installed.

12. The print job management apparatus according to claim 10, wherein the print job management apparatus is a printer controller (20) connected to an image forming apparatus (30) that includes the image forming engine (36).

13. The print job management apparatus according to claim 10, wherein the print job management apparatus is an image forming apparatus (30) that includes the image forming engine (36).

14. A program (521) for a computer (11, 21, 31, 51) that controls a print job management apparatus (10, 20, 30, 50), the program causing the computer to execute the print job management method according to any one of claims 1 to 9.
